# EUROPÄISCHE PATENTSCHRIFT

(11) **EP 4 323 726 B1**
(45) Veröffentlichungstag und Bekanntmachung des Hinweises auf die Patenterteilung: **11.02.2026**
(21) Anmeldenummer: 22719293.7
(22) Anmeldetag: 30.03.2022
(51) Int. Cl.: G01C 21/34, G06Q 10/08, G06Q 10/04, G06Q 10/083

(54) **VERFAHREN UND SYSTEM ZUM ERMITTELN EINES AUSGANGSPUNKTS ZWISCHEN ENTITÄTEN**
METHOD AND SYSTEM FOR DETERMINING A STARTING POINT BETWEEN ENTITIES
PROCÉDÉ ET SYSTÈME DE DÉTERMINATION D'UN POINT DE DÉPART ENTRE DES ENTITÉS

(30) Priorität: 13.04.2021 DE 102021001926
(43) Veröffentlichungstag der Anmeldung: 21.02.2024
(73) Patentinhaber: Mercedes-Benz Group AG, 70372 Stuttgart (DE)
(72) Erfinder: ENGEL, Michael, 70374 Stuttgart (DE); GERBAN, Mark, 22307 Hamburg (DE); LANGE, Benjamin, 71116 Gärtringen (DE)
(74) Vertreter: Novagraaf Group
(86) Internationale Anmeldenummer: PCT/EP2022/058436
(87) Internationale Veröffentlichungsnummer: WO 2022/218709

(56) Entgegenhaltungen:
- EP-A1- 1 729 091
- WO-A1-2019/112566
- US-A1- 2017 122 756
- US-A1- 2018 149 484
- US-B1- 6 424 910

## Beschreibung

Die Erfindung betrifft ein Verfahren zum Ermitteln eines Ausgangspunkts zwischen Entitäten nach der im Oberbegriff von Anspruch 1 näher definierten Art sowie ein System zum Ermitteln des Ausgangspunkts.

Häufig möchten sich Entitäten, beispielsweise Personen, an einem Ort treffen, etwa um einen Kaffee zu trinken oder einen Spaziergang zu machen. Ferner besteht das tägliche Geschäft eines Lieferdiensts daraus, Waren an unterschiedliche Orte zu liefern. Hierzu betreibt der Lieferdienst ein Transportmittel, welches die Waren von einem Ausgangspunkt zu unterschiedlichen Lieferorten bringt.

Dabei stellt sich die Frage, wo genau sich die Personen treffen sollen, oder wo der Ausgangspunkt zum Liefern gewählt wird, damit die Personen einen ungefähr gleich langen Weg zum Treffpunkt haben, beziehungsweise die Lieferorte ausgehend vom Ausgangspunkt gleich schnell erreicht werden können. Dies gewährleistet ein möglichst schnelles Zusammenkommen am Treffpunkt beziehungsweise Ausliefern der Waren. Ferner ist die Anreise der Personen zu einem zeitlich und/oder örtlich mittig zwischen den Aufenthaltsorten der Personen liegen Treffpunkt besonders fair, da somit keine Person viel länger reisen muss, als eine andere Person.

Im Folgenden können als Entitäten beispielsweise verstanden werden: Personen, mobile Endgeräte wie beispielsweise Smartphones, Laptops, Tablet-Computer, Wearables oder dergleichen. Eine entsprechende Person, beziehungsweise Recheneinheit kann auch einem Transportmittel zugeordnet sein. Als Transportmittel kommen beliebige Straßen-, Schienen-, Wasser- und Luftfahrzeuge in Betracht. Dabei kann die Recheneinheit auch in das Transportmittel integriert sein.

Aus der KR 1020100049859 A ist ein Suchverfahren und eine Suchvorrichtung zum Auffinden eines Rendezvouspunkts bekannt, wobei der Rendezvouspunkt einen Mittelpunkt zwischen zwei sich am Rendezvouspunkt treffenden Entitäten entspricht. Zur Bestimmung eines geeigneten sich ungefähr in der Mitte zwischen den Entitäten befindlichen Rendezvouspunkts werden in der Nähe des Mittelpunkts befindliche Point-Of-Interest (POls) gesucht und auf ihre Tauglichkeit für das Rendezvous hin untersucht. Dabei wird eine Distanz zwischen den beiden Entitäten in Kartenmaterial ermittelt und diese zur Bestimmung des Mittelpunkts halbiert.

Ferner offenbart die US 2017/122756 A1 das dynamische Ermitteln eines Treffpunkts für mehrere Teilnehmer. Dabei wird das jeweilige von den respektiven Teilnehmern genutzte Verkehrsmittel und eine damit einhergehende Reisegeschwindigkeit berücksichtigt. Der Treffpunkt kann so ermittelt werden, dass nach Möglichkeit die Teilnehmer zum selben Zeitpunkt am Treffpunkt eintreffen.

Ferner offenbart die US 6 424 910 B1 ein Verfahren und System zur Bereitstellung von zueinander in Verbindung stehenden Navigationsfunktionen für zwei oder mehr Endnutzer. Ein Computersystem empfängt dabei von besagten Endnutzern eine Anfrage zur Ermittlung eines gemeinsamen Treffpunkts. Der Treffpunkt wird so bestimmt, dass zwei sich an verschiedenen Orten aufhaltende Endnutzer beide ungefähr gleichzeitig am Treffpunkt eintreffen.

Ferner offenbart die US 2018/149484 A1 ein Werkzeug zum Unterstützen von Nutzern zum Auffinden eines fairen Treffpunkts. Der Ort des Treffpunkts wird so bestimmt, dass eine Fairnessbedingung in Form einer Kostenfunktion erfüllt ist.

Zudem ist aus der EP 1 729 091 A1 ein Verfahren und System zur Bestimmung eines Treffpunkts für mehrere Nutzer unter Nutzung eines Navigationssystems bekannt. Dabei werden mehrere geeignete Treffpunkte als Alternativen initial vorgegeben und ermittelt welcher dieser Treffpunkte von den Nutzern unter Optimierung der individuell von den Nutzern zurückzulegenden Routen erreicht werden kann.

Der vorliegenden Erfindung liegt die Aufgabe zugrunde, ein verbessertes Verfahren und System zur Ermittlung eines solchen Ausgangspunkts zwischen einer Vielzahl Entitäten anzugeben, mit dessen Hilfe eine Position des Ausgangspunkts zwischen den Entitäten bei verschiedenen Ausgangssituationen besonders fair und genau bestimmbar ist.

Erfindungsgemäß wird diese Aufgabe durch ein Verfahren zum Ermitteln eines Ausgangspunkts zwischen Entitäten mit den Merkmalen des Anspruchs 1 sowie ein entsprechendes System mit den Merkmalen des Anspruchs 8 gelöst. Vorteilhafte Ausgestaltungen und Weiterbildungen ergeben sich aus den hiervon abhängigen Ansprüchen.

Bei einem Verfahren zum Ermitteln eines Ausgangspunkts zwischen Entitäten sind die Entitäten dazu in der Lage, ihren Aufenthaltsort zu bestimmen und jeweils mittels einer Kommunikationsschnittstelle zu kommunizieren. Dabei werden die Aufenthaltsorte der Entitäten in Kartenmaterial bestimmt, ein sämtliche Entitäten umschließender Kreis bestimmt und eine optimale Position des Ausgangspunkts iterativ ermittelt, wobei der Ausgangspunkt anfänglich mit einem Kreismittelpunkt des die Entitäten umschließenden Kreises zusammenfällt, wobei zum Auffinden einer optimalen Position des Ausgangspunkts für jede Entität eine sich aus wenigstens zwei durch jeweils einen Routenabschnitt verbundene Routenpunkten zusammensetzende Route zwischen dem jeweiligen Aufenthaltsort und dem Ausgangspunkt bestimmt wird und zur Verschiebung der Position des Ausgangspunkts eine Summe sämtlicher zeitlichen oder örtlichen Distanzen der Routen zwischen Entitäten und Ausgangspunkt eine festgelegte Maximaldistanz unterschreitet, und/oder eine zeitliche oder örtliche Distanz-Differenz zwischen einer kürzesten und einer längsten Route eine festgelegte Maximaldifferenz unterschreitet, wobei sich die Entitäten ausgehend von ihrem jeweiligen Aufenthaltsorten im Ausgangspunkt treffen, und wobei zur Bestimmung des Ausgangspunkts durchschnittliche Reisegeschwindigkeiten für die jeweiligen Entitäten angenommen werden. Erfindungsgemäß werden dabei die angenommenen durchschnittlichen Reisegeschwindigkeiten für die jeweiligen Entitäten in Abhängigkeit eines von ihnen gewählten Verkehrsmittels erlernt.

Mit Hilfe des erfindungsgemäßen Verfahrens lässt sich der Ausgangspunkt zwischen den Entitäten besonders fair bestimmen. So legen die Entitäten zum Erreichen des Ausgangspunkts die gleiche Wegstrecke zurück und/oder benötigen hierzu die gleiche Zeitdauer. Dabei wird ein Einfluss eines von einer jeweiligen Entität genutzten Verkehrsmittels auf eine Reisedauer bzw. Strecke berücksichtigt. Reist beispielsweise eine erste Entität mit einem Auto und eine zweite Entität mit einem Fahrrad, so kann die von der ersten Entität zurückzulegende Strecke eine größere Weglänge aufweisen, als die von der zweiten Entität zurückzulegende Strecke, da das Auto typischerweise schneller reist als das Fahrrad. Dabei sind die vom Auto zurückzulegende Strecke und die vom Fahrrad zurückzulegende Strecke von dem jeweiligen Verkehrsmittel in derselben Zeitdauer zurücklegbar. Als dieselbe Zeitdauer bzw. Weglänge ist dabei eine gleiche Zeitdauer bzw. Weglänge ab- oder zuzüglich eines festgelegten Toleranzbereichs zu verstehen.

Dabei kann zumindest eine Entität auch auf einem Umfang des Kreises liegen. So lässt sich eine erste Näherung für eine optimale Position des Kreismittelpunkts bestimmen, indem der Kreis so erzeugt wird, dass die zwei am weitesten voneinander entfernten Entitäten auf dem Umfang des Kreises liegen und eine direkte Verbindungslinie dieser beiden Entitäten durch den Kreismittelpunkt verläuft.

Wird der Ausgangspunkt so zwischen den Aufenthaltsorten der Entitäten platziert, dass die Summe sämtlicher zeitlichen oder örtlichen Distanzen der jeweiligen von den Entitäten zum Ausgangspunkt gewählten Routen unterhalb der festgelegten Maximaldistanz liegt, so wird eine zum Eintreffen sämtlicher Entitäten am Ausgangspunkt erforderliche Zeit reduziert. Dabei kann die Summe der zeitlichen oder örtlichen Distanz auch auf einen kleinsten möglichen Wert minimiert werden. Bei einer in Summe kürzesten örtlichen Distanz verbrauchen so die Entitäten am wenigsten Treibstoff, stoßen am wenigsten Schadstoffe aus und gelangen ggf. auch besonders kostengünstig ans Ziel. Gemäß einem besonderen Zufall wäre es auch möglich, dass bei einer Positionierung des Ausgangspunkts so, dass die Summe der örtlichen Distanzen der Routen der Entitäten zum Ausgangspunkt minimiert wird, auch gleichzeitig die Summe der zeitlichen Distanzen minimal ausfällt.

Wird der Ort des Ausgangspunkts hingegen so gewählt, dass die zeitliche oder örtliche Distanz-Differenz die festgelegte Maximaldifferenz unterschreitet, wird es den Entitäten ermöglicht, möglichst zeitgleich am Ausgangspunkt einzutreffen. Dies ist besonders fair, da somit jede Entität ungefähr gleich lange reist. Es ist dabei auch möglich, dass die zeitliche oder örtliche Distanz-Differenz zwischen den von den Entitäten zum Ausgangspunkt bereisten Routen minimiert wird. Auch besteht die Möglichkeit, dass sowohl die Summe der zeitlichen oder örtlichen Distanz die festgelegte Maximaldistanz unterschreitet und die zeitliche oder örtliche Distanz-Differenz die festgelegte Maximaldifferenz unterschreitet.

Es kann jedoch auch die Möglichkeit bestehen, dass der Ausgangspunkt zwischen den Entitäten nicht so platziert werden kann, dass zumindest eines der Kriterien, sprich das Unterschreiten der festgelegten Maximaldistanz seitens der Summe der zeitlichen oder örtlichen Distanz oder das Unterschreiten der festgelegten Maximaldifferenz seitens der zeitlichen oder örtlichen Distanz-Differenz, eingehalten werden kann. In diesem Falle wird das Ermitteln des Ausgangspunkts beendet. Beispielsweise kann dann ein Alternativ-Ausgangspunkt für die Entitäten vorgeschlagen werden, welcher an einer beliebigen Position zwischen den Entitäten platziert wird.

Analog zum Stand der Technik können in einer Nähe einer Route befindliche Point-Of-Interests (POls) zur Bestimmung der Position des Ausgangspunkts berücksichtigt werden. So kann der Ausgangspunkt beispielsweise auch näher in Richtung einer der Entitäten verschoben werden, wenn sich dort ein für die Entitäten interessantes Ziel wie beispielsweise ein Café, eine Bücherei, ein Park oder dergleichen befindet.

Zur Bestimmung des Aufenthaltsorts einer Entität kann diese eine beliebige Aufenthaltsortbestimmungseinrichtung, beispielsweise einen Empfänger eines globalen Navigationssatellitensystems aufweisen. Über die Kommunikationsschnittstelle kann die Entität neben ihrem Aufenthaltsort auch weitere Informationen übermitteln. Dabei kann die Kommunikation direkt zwischen den Entitäten stattfinden oder auch mittelbar über eine dritte Recheneinheit, beispielsweise eine zentrale, ggf. ortsfeste Recheneinheit erfolgen. Als Kommunikationstechnologie kommen jegliche bewährten Kommunikationstechnologien in Frage. Beispielsweise kann die Kommunikation drahtlos, insbesondere mittels Mobilfunk, WiFi, Bluetooth, NFC oder dergleichen erfolgen.

Das Berechnen der Route und das Auffinden des Ausgangspunkts innerhalb des die Entitäten umfassenden Kreises erfolgt wahlweise auf der zentralen Recheneinheit und/oder auf wenigstens einer der Entitäten. Hierzu übertragen die Entitäten ihren jeweiligen Aufenthaltsort mittels der Kommunikationsschnittstelle an die zentrale Recheneinheit und/oder die anderen Entitäten.

Befindet sich der ermittelte Ausgangspunkt innerhalb eines vorher festgelegten Toleranzbereichs, so kann es erforderlich sein, dass die Entitäten der ermittelten Position des Ausgangspunkts und einer Weite des Toleranzbereichs zustimmen müssen, bevor sie ihre Reise zum Ausgangspunkt antreten. So wird sichergestellt, dass der Ausgangspunkt nicht doch unfairerweise zu nahe an eine der Entitäten verschoben wird. Mit Hilfe des Toleranzbereichs lässt sich ein Eintreffen einer Entität am Ausgangspunkt zu einer späteren als einer vereinbarten Zeit, beispielsweise aufgrund einer Verspätung durch Stau und/oder einer Fahrplanabweichung, kompensieren. Beispielsweise nimmt der Toleranzbereich die Form eines weiteren Kreises an, dessen Mittelpunkt im Ausgangspunkt liegt, wobei der weitere Kreis einen geringeren Durchmesser aufweist als der die Entitäten umfassende Kreis.

Wie bereits erwähnt kann es sich bei dem Ausgangspunkt beispielsweise um ein Café, eine Bücherei, einen Park oder dergleichen handeln, von dem aus die Entitäten eine gemeinsame Aktivität starten. In diesem Beispiel könnte der Ausgangspunkt auch als Treffpunkt oder Rendezvouspunkt interpretiert werden.

Zur Bestimmung der optimalen Position des Ausgangspunkts werden durchschnittliche Reisegeschwindigkeiten für die jeweiligen Entitäten angenommen. Die Reisegeschwindigkeiten der jeweiligen Entitäten werden in Abhängigkeit eines von ihnen gewählten Verkehrsmittels erlernt. So kann das Reiseverhalten einer bestimmten Entität über längere Zeit beobachtet werden, woraus sich zeit- und/oder streckenabhängige Fortbewegungsgeschwindigkeiten ergeben. Reist eine Entität beispielsweise eine bestimmte Wegstrecke zu einer bestimmten Zeit mit einer U-Bahn, so kann hierfür beispielsweise zur Rush-Hour aufgrund zum Ein- und Aussteigen einer Vielzahl von Personen eine längere Zeitdauer von Nöten sein. Reist eine weitere Entität beispielsweise mit dem Fahrrad, so kann diese Entität zum Befahren eines bestimmten Routenabschnitts eine kürzere oder längere Zeitdauer benötigen, beispielsweise wenn diese Entität bergauf beziehungsweise bergab fahren muss, oder beispielsweise nach einem Mittagessen aufgrund eines vollen Magens langsamer fährt.

Eine vorteilhafte Ausgestaltung des Verfahrens sieht ferner vor, dass die Aufenthaltsorte der Entitäten in von wenigstens zwei Kartenanbietern bereitgestellten Kartenmaterial bestimmt werden, wobei die im unterschiedlichen Kartenmaterial bestimmten Aufenthaltsorte jeweils einer Entität miteinander verglichen werden. Durch das Nutzen von verschiedenen Kartenanbietern bereitgestelltem Kartenmaterial lässt sich der Aufenthaltsort einer jeweiligen Entität und letztendlich damit auch eine Position des Ausgangspunkts innerhalb des die Entitäten umschließenden Kreises noch genauer bestimmen. Durch den Abgleich von Kartendaten unterschiedlicher Anbieter können Positionsabweichungen beziehungsweise eine ungenau bestimmte Position einer Entität festgestellt und korrigiert werden. Auch kann das Kartenmaterial der verschiedenen Kartenanbietern verschiedene POls und/oder Karteninformationen umfassen. Hierdurch wird eine zur Durchführung des erfindungsgemäßen Verfahrens herangezogene Informationsmenge vergrößert. Dadurch kann das Verfahren noch zuverlässiger eingesetzt werden.

Entsprechend einer weiteren vorteilhaften Ausgestaltung des Verfahrens werden bei der Berechnung der Routen zwischen den Aufenthaltsorten der Entitäten und dem Ausgangspunkt aktuelle Verkehrsinformationen berücksichtigt. Reist eine Entität beispielsweise mit einem Auto, so kann auf der von dieser Entität zurückgelegten Strecke ein Stau vorliegen. Hierdurch verlängert sich eine zum Zurücklegen der Strecke erforderliche Zeitdauer. Reist beispielsweise die weitere Entität mit einem öffentlichen Verkehrsmittel wie einer U-Bahn, Straßenbahn, S-Bahn, einem Stadtbus oder dergleichen, so kann es auch hier zu Verzögerungen kommen. Informationen über mögliche Staus und/oder Fahrplanänderungen können über bewährte Quellen von Dritten bezogen werden. Diese Verzögerungen werden vorteilhafterweise bei der Ermittlung der Ausgangsposition berücksichtigt. Verlängert sich beispielsweise eine zum Zurücklegen einer Strecke erforderlichen Zeitdauer durch eine solche Verzögerung, so wird der Ausgangspunkt derart verschoben, dass trotzdem zum gleichen Zeitpunkt, plus minus der festgelegten Toleranzschwelle, die Entitäten am Ausgangspunkt eintreffen. Hierdurch wird auch bei realistischen Verkehrssituationen gewährleistet, dass eine Position des Ausgangspunkts besonders fair und genau bestimmt wird.

Eine weitere vorteilhafte Ausgestaltung des Verfahrens sieht ferner vor, dass sich wenigstens eine Entität mit einem der folgenden Verkehrsmittel entlang ihrer Route bewegt:
- zu Fuß;
- auf einem Fahrrad;
- auf einem E-Scooter;
- mittels eines öffentlichen Verkehrsmittels, insbesondere mittels Bus und/oder Bahn;
- mit einem Auto, insbesondere einem PKW, LKW und/oder einem Transporter;
- mit einem Flugzeug; oder
- mit einem autonom steuerbaren Fahrzeug, insbesondere einer Drohne, bevorzugt einer fliegenden Drohne.

Generell ist es dabei auch denkbar, dass die Entität während ihrer Reise entlang der Route das Verkehrsmittel wechselt. So kann die Entität beispielsweise während eines ersten Routenabschnitts zu Fuß unterwegs sein, dann auf ein Fahrrad wechseln, und einen letzten Routenabschnitt beispielsweise mit einem Bus zurücklegen. Die Entität kann beispielsweise auch einen E-Scooter benutzen. Hierdurch wird eine Anwendung des erfindungsgemäßen Verfahrens bei noch umfangreicheren und verschiedenen Reisesituationen ermöglicht.

Reist beispielsweise eine Entität mit der Bahn, so wird für diese Entität in einem Umkreis mit einem festgelegten Radius um den Aufenthaltspunkt der jeweiligen Entität befindliche Haltestellen in Kartenmaterial ermittelt und von den jeweiligen Haltestellen ausgehende Verbindungen inklusive potentieller Umstiegsmöglichkeiten zur jeweiligen Haltestation in der Nähe des Ausgangspunkts ermittelt und auf ihre Reisezeit hin untersucht. Zur Bestimmung der Gesamtreisezeit für eine Entität wird dabei auch beispielsweise eine Entfernung und/oder Zeitdauer, welche die jeweilige Entität zur Haltestelle beispielsweise zu Fuß zurücklegen muss, berücksichtigt. Als Ausgangspunkt kann ebenso eine Haltestelle oder auch ein Punkt nahe einer Haltestelle bestimmt werden. Dabei ist es auch denkbar, dass verschiedene Entitäten mit unterschiedlichen Verkehrsmitteln reisen, beispielsweise einige Entitäten mit der Bahn und einem E-Scooter reisen, einige Entitäten mit dem Auto fahren und zu Fuß gehen und einige Entitäten ausschließlich mit dem Fahrrad fahren.

Entsprechend einer weiteren vorteilhaften Ausgestaltung des Verfahrens führt ein Algorithmus zur Bestimmung der Position des Ausgangspunkts innerhalb des die Entitäten umfassenden Kreises zumindest folgende Schritte durch:
- Bestimmen einer geeigneten Position eines Kreismittelpunkts eines Kreises und eines minimalen Kreisdurchmessers, sodass sämtliche Entitäten innerhalb oder auf einem Umfang des Kreises liegen;
- Legen der Position des Ausgangspunkts an die Position des Kreismittelpunkts;
- Für jede Entität: Bestimmen einer sich vom Aufenthaltsort zum Ausgangspunkt erstreckenden Route;
- Verschieben der Position des Ausgangspunkts, sodass eine Summe sämtlicher zeitlichen oder örtlichen Distanzen der Routen zwischen Entitäten und Ausgangspunkt eine festgelegte Maximaldistanz unterschreitet, und/oder eine zeitliche oder örtliche Distanz-Differenz zwischen einer kürzesten und einer längsten Route eine festgelegte Maximaldifferenz unterschreitet.

Das Legen des Ausgangspunkts in den Kreismittelpunkt des Kreises stellt eine erste Näherung zum Auffinden der optimalen Position des Ausgangspunkts zwischen den Entitäten dar, damit die Entitäten möglichst schnell und/oder fair, gleichzeitig am Ausgangspunkt eintreffen können. Eine Bestimmung des Kreises ist einfach und schnell möglich. Gemäß einer beispielhaften Ausführungsform werden hierzu die beiden Entitäten mit dem größten Abstand zueinander aus sämtlichen Entitäten ausgewählt und der Kreis so aufgespannt, dass diese Entitäten auf dem Umfang des Kreises liegen. Der Kreismittelpunkt liegt dann auf einer direkten Verbindungslinie dieser Entitäten zueinander. Anschließend wird der Ausgangspunkt ausgehend vom Kreismittelpunkt solange verschoben, bis die Summe sämtlicher zeitlichen oder örtlichen Distanzen der Routen zwischen Entitäten und Ausgangspunkt eine festgelegte Maximaldistanz unterschreitet, und/oder eine zeitliche oder örtliche Distanz-Differenz zwischen einer kürzesten und einer längsten Route eine festgelegte Maximaldifferenz unterschreitet. Andere Vorgehensweisen zum Aufspannen des die Entitäten umschließenden Kreises sind denkbar.

Eine weitere vorteilhafte Ausgestaltung des Verfahrens sieht ferner vor, dass der Ausgangspunkt unter Berücksichtigung eines aktuellen Aufenthaltsorts wenigstens einer Entität neu berechnet wird. Kommt es beispielsweise zu Verzögerungen während der Reise entlang der Route bei wenigstens einer Entität, so würde dies dazu führen, dass die Entitäten nicht gleichzeitig am Ausgangspunkt eintreffen. Indem jedoch während der Reise entlang der Routen die aktuelle Position der jeweiligen Entität überwacht wird, kann die Position des Ausgangspunkts innerhalb des die Entitäten umfassenden Kreises adaptiv verschoben werden. Hierdurch kann ein gleichzeitiges Eintreffen der Entitäten am Ausgangspunkt beziehungsweise das Eintreffen der Waren an den ursprünglichen Aufenthaltsorten der Entitäten gewährleistet werden. Auch kann bei einer Rückreise der Drohnen zum Verteilfahrzeug sich das Verteilfahrzeug in Richtung einer Drohne bewegen, wenn diese Drohne für Ihre Rückkehr länger braucht als gedacht.

Bevorzugt wird zur Bestimmung der Position des Ausgangspunkts innerhalb des Kreises zusätzlich wenigstens eines der folgenden Kriterien berücksichtigt:
- eine Fairness;
- eine durch ein Bewegen wenigstens eines Verkehrsmittels entlang einer Route anfallende Schadstoffmenge, insbesondere eine CO₂-Menge;
- eine von wenigstens einem Verkehrsmittel zum Bewegen entlang einer Route erforderliche Energiemenge; und/oder
- zum Bewegen wenigstens eines Verkehrsmittels entlang einer Route anfallende Kosten.

Durch Berücksichtigen wenigstens eines der genannten Kriterien lässt sich eine Verschiebung des Ausgangspunkts innerhalb des die Entitäten umfassenden Kreises gemäß Vorlieben von Kunden anpassen. Beispielsweise kann gemäß einem ersten Szenario der Ausgangspunkt so innerhalb des Kreises positioniert werden, dass die Entitäten den Ausgangspunkt nach einer möglichst kurzen Zeitdauer erreichen. Beispielsweise reist eine Entität mit einem PKW zum Ausgangspunkt, jedoch muss eine weitere Entität zum Erreichen des Ausgangspunkts mehrmals das Verkehrsmittel wechseln. Dies ist mit einem hohen Aufwand für die weitere Entität verbunden. Unter Berücksichtigung der Fairness kann der Ausgangspunkt innerhalb des Kreises so verschoben werden, dass für alle Entitäten zum Erreichen des Ausgangspunkts eine längere Zeitdauer notwendig ist, jedoch die Entitäten zum Erreichen des Ausgangspunkts einen ähnlichen Aufwand überwinden müssen. Beispielsweise kann dann der Ausgangspunkt an eine Haltestelle eines öffentlichen Verkehrsmittels gesetzt werden, woraufhin eine Vielzahl an Entitäten mit öffentlichen Verkehrsmitteln zum Ausgangspunkt reisen. Hierzu müssen dann die jeweiligen Entitäten gleich oft umsteigen.

Eine Akzeptanz zur Durchführung des erfindungsgemäßen Verfahrens kann durch die Berücksichtigung einer anfallenden Schadstoffmenge bei umweltbewussten Personen gesteigert werden.

Entsprechend kann auch eine zum Reisen entlang der Routen erforderliche Energiemenge und/oder damit anfallende Kosten zur Positionierung des Ausgangspunkts innerhalb des Kreises berücksichtigt werden.

Insbesondere ist ein Kunde dazu in der Lage, selbst zu entscheiden, welches oder welche der genannten Kriterien zur Bestimmung der Position des Ausgangspunkts zusätzlich berücksichtigt werden sollen. Dies sorgt für einen besonders hohen Komfort und Zufriedenheit bei der Nutzung des erfindungsgemäßen Verfahrens.

Bei einem System zum Ermitteln eines Ausgangspunkts zwischen Entitäten, umfassend wenigstens drei Entitäten, wobei die Entitäten jeweils dazu eingerichtet sind ihren Aufenthaltsort zu bestimmen und diesen über eine Kommunikationsschnittstelle zu teilen, sind erfindungsgemäß wenigstens die drei Entitäten dazu eingerichtet, ein im vorigen beschriebenes Verfahren auszuführen.

Bei den Entitäten handelt es sich beispielsweise um Personen oder Recheneinheiten, beispielsweise in Form eines mobilen Endgeräts wie einem Smartphone, Tablet-Computer, Laptop, Wearable oder dergleichen. Die Personen und/oder Recheneinheiten können mit einem Verkehrsmittel wie einem PKW, LKW, Transporter, Bus, einer Bahn, einem Fahrrad, zu Fuß oder dergleichen reisen. Auch ist ein Wechsel des Verkehrsmittels während einer Reise einer Entität möglich. Auch kann wenigstens eine Entität in ein entsprechendes Verkehrsmittel integriert sein. So kann beispielsweise eine Entität von einer Recheneinheit eines Fahrzeugs ausgebildet sein.

Auch können die Entitäten mittelbar über eine zentrale Recheneinheit kommunizieren. Die zentrale Recheneinheit kann auch den Ausgangspunkt für die Entitäten ermitteln. Die zentrale Recheneinheit empfängt hierzu die Aufenthaltsorte der Entitäten und ermittelt unter Anwendung eines erfindungsgemäßen Verfahrens den Ausgangspunkt zum Treffen beziehungsweise zum Ausschwärmen von Drohnen.

Weitere vorteilhafte Ausgestaltungen des erfindungsgemäßen Verfahrens zum Ermitteln des Ausgangspunkts zwischen den Entitäten ergeben sich auch aus den Ausführungsbeispielen, welche nachfolgend unter Bezugnahme auf die Figuren näher beschrieben werden.

Dabei zeigen:
- Fig. 1: eine schematische Darstellung sich an einem Ausgangspunkt für ein Treffen verabredeter Entitäten in einer digitalen Straßenkarte;
- Fig. 2: eine weitere schematische Darstellung sich an einem Ausgangspunkt für ein Treffen verabredeter Entitäten in einer digitalen Straßenkarte; und
- Fig. 3: eine Prinzipdarstellung eines Ablaufdiagramms eines erfindungsgemäßen Verfahrens zum Ermitteln des Ausgangspunkts zwischen Entitäten.

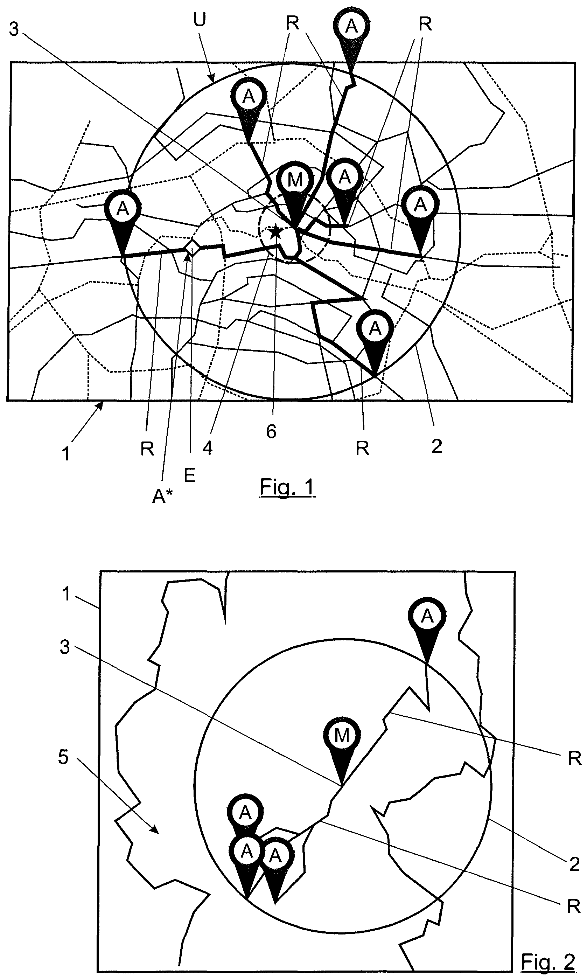

Figur 1 zeigt Kartenmaterial 1, hier in Form einer digitalen Straßenkarte. In dem Beispiel in Figur 1 umfasst die digitale Straßenkarte einen Ausschnitt eines Ballungsraums, beispielsweise einer Großstadt. In der Großstadt befinden sich mehrere Entitäten E an einem jeweiligen Aufenthaltsort A. Dargestellt ist lediglich eine Entität E, welche sich an einem aktuellen Aufenthaltsort A* auf einer Reise entlang einer Route R befindet. Die Entitäten E haben sich für ein Treffen verabredet. Mit Hilfe eines erfindungsgemäßen Verfahrens wird ein Ausgangspunkt M bestimmt, zu dem die Entitäten E in einer gleichen Zeit und/oder durch Zurücklegen einer gleichen Wegstrecke gelangen können. Dabei reist eine Entität E entlang einer für sie ermittelten Route R zum Ausgangspunkt M. Somit wird gewährleistet, dass eine Zeitdauer, bis sämtliche am Treffen beteiligte Entitäten E am Ausgangspunkt M eintreffen, minimiert wird und/oder ihre Anreise besonders fair ausfällt, da jede Entität E gleich lange reisen muss.

Bei den Entitäten E handelt es sich beispielsweise um Personen oder Recheneinheiten, beispielsweise in Form eines mobilen Endgeräts wie ein Smartphone, Tablet-Computer, Laptop, Wearable oder dergleichen. Eine solche Recheneinheit kann auch in ein Fahrzeug integriert sein. Beispielsweise kann es sich dann bei der Recheneinheit um einen zentralen Bordcomputer eines Fahrzeugs, ein Steuergerät eines Fahrzeuguntersystems, eine Telematikeinheit oder dergleichen handeln.

Die Entitäten E bewegen sich jeweils mit einem Verkehrsmittel durch die Großstadt. Beispielsweise sind die Entitäten E zu Fuß, mittels Fahrrad, mittels E-Scooter, mittels einem öffentlichen Nahverkehrsmittel, einem privat betriebenen Fahrzeug wie einem PKW, LKW, Transporter oder dergleichen, und/oder einem autonom betriebenen Fahrzeug, beispielsweise einer Drohne, unterwegs. Dabei ist auch während einer Reise von einem ursprünglichen Aufenthaltsort A zum Ausgangspunkt M ein einmaliger oder mehrmaliger Wechsel des Verkehrsmittels möglich. Beispielsweise kann eine Entität E in Form einer Person von ihrem Wohnort mit einem E-Scooter zu einer Haltestelle eines öffentlichen Nahverkehrsmittels fahren und dann mit beispielsweise einem Bus zu einer in der Nähe des Ausgangspunkts M befindlichen Haltestelle reisen und dort von der Haltestelle zu Fuß den Ausgangspunkt M erreichen.

Erfindungsgemäß wird eine Lage des Ausgangspunkt M im Kartenmaterial 1 so bestimmt, dass eine Summe sämtlicher zeitlichen oder örtlichen Distanzen der Routen R zwischen einem ursprünglichen Aufenthaltsort A der Entitäten E und Ausgangspunkt M eine festgelegte Maximaldistanz unterschreitet, und/oder eine zeitliche oder örtliche Distanz-Differenz zwischen einer kürzesten und einer längsten Route R eine festgelegte Maximaldifferenz unterschreitet. Zur Bestimmung einer Lage des Ausgangspunkts M wird eine unterschiedliche Reisegeschwindigkeit in Abhängigkeit eines gewählten Verkehrsmittels beachtet.

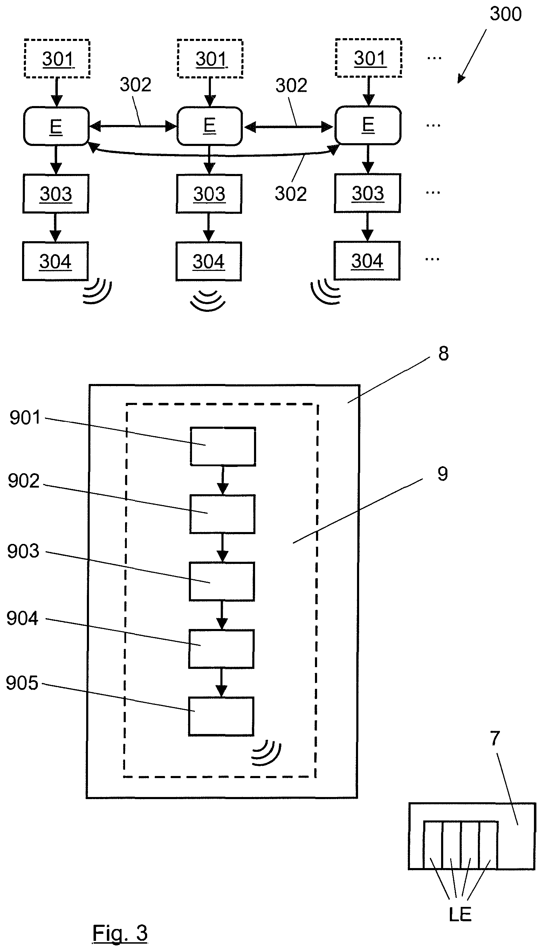

Zur Ermittlung des Ausgangspunkts M bestimmen die Entitäten E ihren jeweiligen Aufenthaltsort A, anschließend übertragen die Entitäten E ihre Position zumindest an eine die Lage des Ausgangspunkts M ermittelnde Recheneinheit. Diese Recheneinheit kann von wenigstens einer der Entitäten E und/oder einer in Figur 3 dargestellten zentralen Recheneinheit 8 ausgebildet sein. Die entsprechende Recheneinheit bestimmt einen sämtliche am Treffen beteiligte Entitäten E umfassenden Kreis 2. Beispielsweise kann der Kreis 2 bestimmt werden, indem die beiden am weitesten voneinander entfernten Entitäten E ermittelt werden und der Kreis 2 so gelegt wird, dass diese Entitäten E auf einem Umfang U des Kreises 2 platziert werden. Dabei kann eine direkte Verbindungslinie dieser beiden Entitäten E durch einen Kreismittelpunkt 3 des Kreises 2 verlaufen. Bevorzugt weist der Kreis 2 einen möglichst geringen Durchmesser auf. In einer ersten Näherung wird der Ausgangspunkt M in den Kreismittelpunkt 3 gelegt und solange iterativ innerhalb des Kreises 2 verschoben, dass die Summe sämtlicher zeitlichen oder örtlichen Distanzen der Routen R zwischen Entitäten E und Ausgangspunkt M die festgelegte Maximaldistanz unterschreitet, und/oder die zeitliche oder örtliche Distanz-Differenz zwischen einer kürzesten und einer längsten Route R die festgelegte Maximaldifferenz unterschreitet.

Dabei können die Entitäten E ihren aktuellen Aufenthaltsort A* erfassen. Gemäß einer Ausführungsform des erfindungsgemäßen Verfahrens kann der jeweilige aktuelle Aufenthaltsort A* zur adaptiven Verschiebung des Ausgangspunkts M herangezogen werden. Steht beispielsweise eine der Entitäten E im Stau, so kann der Ausgangspunkt M näher zur dieser Entität E verschoben werden. Dies gewährleistet, dass die Entitäten E trotz eines zeitlichen Verzugs zumindest einer Entität E, wie geplant, gleichzeitig am Ausgangspunkt M eintreffen.

Auch ist es möglich, dass sich ein oder mehrere POls 6 nahe des Ausgangspunkts M befinden und der Ausgangspunkt M auf einen dieser POls 6 oder in eine Nähe hierzu gelegt wird. Beispielsweise kann es sich bei dem POI 6 um ein Café, eine Bücherei, einen Park oder dergleichen handeln. Mit anderen Worten planen die Entitäten E ein Treffen an einem der POls 6.

Zur Verbesserung einer Genauigkeit, mit der die jeweiligen Aufenthaltsorte A, A* bestimmt werden, kann gemäß einer Ausführungsform des erfindungsgemäßen Verfahrens von verschiedenen Kartenanbietern bereitgestelltes Kartenmaterial 1 verwendet werden.

Figur 1 zeigt ferner einen kreisförmigen Toleranzbereich 4. So gelten die im vorigen definierten Kriterien zum Eintreffen der Entitäten E am Ausgangspunkt M als erfüllt, wenn sich die Entitäten zu einem festgelegten Zeitpunkt innerhalb des Toleranzbereichs 4 befinden. Ein Radius des Toleranzbereichs 4 kann beispielsweise nur wenige Meter oder aber auch einige hundert Meter oder auch Kilometer betragen. Vorteilhafterweise legen die an dem Treffen beteiligten Entitäten E vor Reiseantritt ihrer jeweiligen Route R fest, wie groß der Radius des Toleranzbereichs 4 gewählt wird. Dies gewährleistet, dass die Reise zum Ausgangspunkt M für jede Entität E als fair erachtet wird.

Zur genaueren Ermittlung einer zum Zurücklegen einer Route R erforderlichen Weglänge und/oder Zeit kann zumindest eine Route R auch in mehrere Routenabschnitte unterteilt werden. Dabei ist jeder Routenabschnitt mit Informationen wie einer Weglänge, einem geltenden Tempolimit, den Routenabschnitt befahrende Linien, bspw. U-Bahn Linien, eine zum Zurücklegen des Routenabschnitts erforderliche Zeitdauer oder dergleichen behaftet. Ein Routenabschnitt kann zur Erhöhung einer Genauigkeit iterativ in weitere Sub-Routenabschnitte unterteilt werden.

Gemäß eines nicht unter den Schutzumfang der Erfindung fallenden Beispiels ist es vorgesehen, dass ein Verteilfahrzeug 7, welches in Figur 3 dargestellt ist, zum Ausgangspunkt M reist, und vom Verteilfahrzeug 7 aus Liefer-Entitäten LE, beispielsweise Drohnen, zu den Aufenthaltsorten A oder auch A* der Entitäten E ausschwärmen.

Beispielsweise können die Drohnen Waren an die Entitäten E liefern. Bei den Waren kann es sich beispielsweise um Pakete oder um Nahrungsmittel handeln.

Figur 2 verdeutlicht, dass das erfindungsgemäße Verfahren nicht auf bestimmte Distanzen beschränkt ist. So lässt sich das erfindungsgemäße Verfahren auch dazu einsetzen, um einen Ausgangspunkt M für mehrere Entitäten E zu bestimmen, welche sich an entgegengesetzten Enden eines Landes 5 befinden.

Figur 3 zeigt ein Ablaufdiagramm 300 des erfindungsgemäßen Verfahrens. In einem optionalen Verfahrensschritt 301 können die Entitäten E festlegen, ob zur Bestimmung des Ausgangspunkts M Zusatzkriterien berücksichtigt werden sollen. Bei den Zusatzkriterien handelt es sich beispielsweise um eine Fairness, eine durch ein Bewegen wenigstens eines Verkehrsmittels entlang einer Route R anfallende Schadstoffmenge, insbesondere in Form von CO₂, eine von wenigstens einem Verkehrsmittel zum Bewegen entlang einer Route R erforderliche Energiemenge und/oder hierzu anfallende Kosten.

In einem Verfahrensschritt 302 verabreden sich die Entitäten E zum Treffen am Ausgangspunkt M. In einem Verfahrensschritt 303 bestimmen die jeweiligen Entitäten E ihren ursprünglichen Aufenthaltsort A und übermitteln diesen im Verfahrensschritt 304 weiter. In dem Beispiel in Figur 3 wird der jeweilige Aufenthaltsort A an eine zentrale Recheneinheit 8, beispielsweise einen Cloud-Server beziehungsweise ein Backend eines Serviceanbieters übertragen. Der Ausgangspunkt M wird dann von der zentralen Recheneinheit 8 bestimmt. Hierzu wird auf der zentralen Recheneinheit 8 ein Algorithmus 9 ausgeführt. Der Algorithmus 9 umfasst fünf Arbeitsschritte 901, 902, 903, 904 und 905.

Im Arbeitsschritt 901 wird ein die Entitäten E umschließender Kreis 2 und seine Lage im Kartenmaterial 1 ermittelt. Im Arbeitsschritt 902 wird der Ausgangspunkt M als erste Näherung in den Kreismittelpunkt 3 des Kreises 2 gelegt. Im Arbeitsschritt 903 wird für jede Entität E eine Route R von ihrem ursprünglichen Aufenthaltsort A zum Ausgangspunkt M ermittelt. Im Arbeitsschritt 904 wird dann die Lage des Ausgangspunkts M innerhalb des Kreises 2 so lange verschoben, bis die Summe sämtlicher zeitlichen oder örtlichen Distanzen der Routen R zwischen Entitäten E und Ausgangspunkt M die festgelegte Maximaldistanz unterschreitet, und/oder eine zeitliche oder örtliche Distanz-Differenz zwischen einer kürzesten und einer längsten Route R eine festgelegte Maximaldifferenz unterschreitet. Dabei werden entsprechend neue Routen R der Entitäten E berechnet. So wird schließlich im Arbeitsschritt 905 eine optimale Lage des Ausgangspunkts M innerhalb des Kreises 2 gefunden. Diese Lage wird dann an die Entitäten E zurückübermittelt, damit sie ihre Reise zum Ausgangspunkt M antreten können.

Auch ist es möglich, dass eine Lage des Ausgangspunkts M und/oder weitere damit verknüpfte Informationen an ein Verteilfahrzeug 7 übermittelt wird. Das Verteilfahrzeug 7 umfasst Liefer-Entitäten LE. Dabei kann es sich beispielsweise um individuelle Personen oder auch autonome Drohnen, beispielsweise flugfähige Drohnen handeln, welche Waren, Speisen oder dergleichen an die Entitäten E liefern. Befindet sich das Verteilfahrzeug 7 im Ausgangspunkt M, wenn die Liefer-Entitäten LE vom Verteilfahrzeug 7 ausschwärmen, so können die Liefer-Entitäten LE die Entitäten E gleichzeitig erreichen und bevorzugt auch gleichzeitig wieder am Verteilfahrzeug 7 zurück eintreffen. Hierdurch kann ein Lieferdienst besonders effektiv und effizient Waren an Kunden verteilen. Dabei kann der Radius bzw. Durchmesser des Kreises 2 auch unter Berücksichtigung einer möglichen Reichweite der Liefer-Entitäten LE ermittelt werden, um sicherzugehen, dass beispielsweise ein Energievorrat einer Drohne nicht erschöpft ist, bevor die Drohne an einer von ihr zu beliefernden Entität E oder zurück am Verteilfahrzeug 7 eingetroffen ist.

Generell ist es auch möglich, dass sich die Entitäten E ihren Aufenthaltsort A gegenseitig übermitteln, und auf eine Datenübertragung an die zentrale Recheneinheit 8 verzichtet wird. So kann beispielsweise der Algorithmus 9 auch auf einer oder sämtlichen Entitäten E ausgeführt werden. Dementsprechend übermittelt eine der Entitäten E den von ihr bestimmten Ausgangspunkt M an die anderen Entitäten E zurück.

## Patentansprüche

1. Verfahren zum Ermitteln eines Ausgangspunkts (M) zwischen Entitäten (E), wobei die Entitäten (E) jeweils dazu eingerichtet sind, ihren Aufenthaltsort (A, A*) zu bestimmen und mittels einer Kommunikationsschnittstelle zu kommunizieren,
wobei
die Aufenthaltsorte (A) der Entitäten (E) in Kartenmaterial (1) bestimmt werden, ein sämtliche Entitäten (E) umschließender Kreis (2) bestimmt wird und eine optimale Position des Ausgangspunkts (M) iterativ ermittelt wird, wobei der Ausgangspunkt (M) anfänglich mit einem Kreismittelpunkt (3) des die Entitäten (E) umschließenden Kreises (2) zusammenfällt, wobei zum Auffinden einer optimalen Position des Ausgangspunkts (M) für jede Entität (E) eine sich aus wenigstens zwei durch jeweils einen Routenabschnitt verbundenen Routenpunkten zusammensetzende Route (R) zwischen dem jeweiligen Aufenthaltsort (A) und dem Ausgangspunkt (M) bestimmt wird und zur Verschiebung der Position des Ausgangspunkts (M) eine Summe sämtlicher zeitlichen oder örtlichen Distanzen der Routen (R) zwischen Entitäten (E) und Ausgangspunkt (M) eine festgelegte Maximaldistanz unterschreitet, und/oder eine zeitliche oder örtliche Distanz-Differenz zwischen einer kürzesten und einer längsten Route (R) eine festgelegte Maximaldifferenz unterschreitet, wobei sich die Entitäten (E) ausgehend von ihren jeweiligen Aufenthaltsorten (A) im Ausgangspunkt (M) treffen, und wobei zur Bestimmung des Ausgangspunkts (M) durchschnittliche Reisegeschwindigkeiten für die jeweiligen Entitäten (E) angenommen werden,
**dadurch gekennzeichnet, dass**
die angenommenen durchschnittlichen Reisegeschwindigkeiten für die jeweiligen Entitäten (E) in Abhängigkeit eines von ihnen gewählten Verkehrsmittels erlernt werden.

2. Verfahren nach Anspruch 1,
**dadurch gekennzeichnet, dass**
die Aufenthaltsorte (A) der Entitäten (E) in von wenigstens zwei Kartenanbietern bereitgestelltem Kartenmaterial (1) bestimmt werden, wobei die im unterschiedlichen Kartenmaterial (1) bestimmten Aufenthaltsorte (A) jeweils einer Entität (E) miteinander verglichen werden.

3. Verfahren nach Anspruch 1 oder 2,
**dadurch gekennzeichnet, dass**
bei der Berechnung der Route (R) zwischen den Aufenthaltsorten (A) und dem Ausgangspunkt (M) aktuelle Verkehrsinformationen berücksichtigt werden.

4. Verfahren nach einem der Ansprüche 1 bis 3,
**dadurch gekennzeichnet, dass**
sich wenigstens eine Entität (E) mit einem der folgenden Verkehrsmittel entlang ihrer Route (R) bewegt:
- zu Fuß;
- auf einem Fahrrad;
- mit einem E-Scooter;
- mittels eines öffentlichen Verkehrsmittels, insbesondere mittels Bus und/oder Bahn;
- mit einem Auto, insbesondere einem PKW, LKW und/oder einem Transporter; oder
- mit einem autonom steuerbaren Fahrzeug, insbesondere einer Drohne, bevorzugt einer fliegenden Drohne.

5. Verfahren nach einem der Ansprüche 1 bis 4,
**dadurch gekennzeichnet, dass**
ein Algorithmus (9) zur Bestimmung der Position des Ausgangspunkts (M) zumindest folgende Schritte durchführt:
- Bestimmen einer geeigneten Position eines Kreismittelpunkts (3) eines Kreises (2) und eines minimalen Kreisdurchmessers, sodass sämtliche Entitäten (E) innerhalb und/oder auf einem Umfang (U) des Kreises (2) liegen;
- Legen der Position des Ausgangspunkts (M) an die Position des Kreismittelpunkts (3);
- Für jede Entität (E): Bestimmen einer sich vom Aufenthaltsort (A) zum Ausgangspunkt (M) erstreckenden Route (R);
- Verschieben der Position des Ausgangspunkts (M), sodass eine Summe sämtlicher zeitlichen oder örtlichen Distanzen der Routen (R) zwischen Entitäten (E) und Ausgangspunkt (M) eine festgelegte Maximaldistanz unterschreitet, und/oder eine zeitliche oder örtliche Distanz-Differenz zwischen einer kürzesten und einer längsten Route (R) eine festgelegte Maximaldifferenz unterschreitet.

6. Verfahren nach einem der Ansprüche 1 bis 5,
**dadurch gekennzeichnet, dass**
der Ausgangspunkt (M) unter Berücksichtigung eines aktuellen Aufenthaltsorts (A*) wenigstens einer der Entitäten (E) neu berechnet wird.

7. Verfahren nach einem der Ansprüche 1 bis 6,
**dadurch gekennzeichnet, dass**
zur Bestimmung der optimalen Position des Ausgangspunkts (M) zusätzlich wenigstens eines der folgenden Kriterien berücksichtigt wird:
- eine Fairness;
- eine durch ein Bewegen wenigstens eines Verkehrsmittels entlang einer Route (R) anfallende Schadstoffmenge, insbesondere eine CO₂-Menge;
- eine von wenigstens einem Verkehrsmittel zum Bewegen entlang einer Route (R) erforderliche Energiemenge; und/oder
- zum Bewegen wenigstens eines Verkehrsmittels entlang einer Route (R) anfallende Kosten.

8. System zum Ermitteln eines Ausgangspunkts (M) zwischen Entitäten (E), umfassend wenigstens drei Entitäten (E), wobei die Entitäten (E) jeweils dazu eingerichtet sind ihren Aufenthaltsort zu bestimmen und diesen über eine Kommunikationsschnittstelle zu teilen,
**dadurch gekennzeichnet, dass**
wenigstens die drei Entitäten (E) dazu eingerichtet sind ein Verfahren nach einem der Ansprüche 1 bis 7 auszuführen.

## Claims

1. Method for determining a starting point (M) between entities (E), the entities (E) each being configured to determine their location (A, A*) and to communicate by means of a communication interface,
the locations (A) of the entities (E) being determined in map data (1), a circle (2) that encompasses all entities (E) being determined, and an optimal position of the starting point (M) being iteratively determined, the starting point (M) initially coinciding with a circle center (3) of the circle (2) that encompasses the entities (E), a route (R), which consists of at least two route points connected by a route segment between the particular location (A) and the starting point (M), being determined for each entity (E) in order to find an optimal position of the starting point (M), and, in order to shift the position of the starting point (M), a sum of all temporal or spatial distances of the routes (R) between entities (E) and the starting point (M) falling below a specified maximum distance, and/or a temporal or spatial distance difference between a shortest and a longest route (R) falling below a specified maximum difference, the entities (E) meeting at the starting point (M) starting from their respective locations (A), and average travel speeds for each of the entities (E) being assumed in order to determine the starting point (M),
**characterized in that**
the assumed average travel speeds for each of the entities (E) can be learned depending on a means of transport selected by them.

2. Method according to claim 1,
**characterized in that**
the locations (A) of the entities (E) are determined in map data (1) provided by at least two map providers, the locations (A) of each entity (E) that are determined in the different map data (1) being compared with one another.

3. Method according to claim 1 or claim 2,
**characterized in that**
current traffic information is taken into account when calculating the route (R) between the locations (A) and the starting point (M).

4. Method according to any of claims 1 to 3,
**characterized in that**
at least one entity (E) moves along its route (R) by means of one of the following means of transport:
- on foot;
- on a bicycle;
- on an e-scooter;
- by means of public transport, in particular by means of a bus and/or train;
- by car, in particular a passenger car, truck and/or a van; or
- by an autonomously controllable vehicle, in particular a drone, preferably a flying drone.

5. Method according to any of claims 1 to 4,
**characterized in that**
an algorithm (9) for determining the position of the starting point (M) carries out at least the following steps:
- determining a suitable position of a circle center (3) of a circle (2) and a minimum circle diameter, such that all entities (E) lie within and/or on a circumference (U) of the circle (2);
- positioning the starting point (M) at the position of the circle center (3);
- for each entity (E): determining a route (R) that extends from the location (A) to the starting point (M);
- shifting the position of the starting point (M) such that a sum of all temporal or spatial distances of the routes (R) between entities (E) and the starting point (M) falls below a specified maximum distance, and/or a temporal or spatial distance difference between a shortest and a longest route (R) falls below a specified maximum difference.

6. Method according to any of claims 1 to 5,
**characterized in that**
the starting point (M) is recalculated taking into account a current location (A*) of at least one of the entities (E).

7. Method according to any of claims 1 to 6,
**characterized in that**
at least one of the following criteria is also taken into account for determining the optimal position of the starting point (M):
- fairness;
- an amount of pollutant, in particular an amount of CO₂, arising from the movement of at least one means of transport along a route (R);
- an amount of energy required by at least one means of transport in order to move along a route (R); and/or
- costs incurred for the movement of at least one means of transport along the route (R).

8. System for determining a starting point (M) between entities (E), comprising at least three entities (E), the entities (E) each being configured to determine their location and share it via a communication interface,
**characterized in that**
at least the three entities (E) are configured to perform a method according to any of claims 1 to 7.

## Revendications

1. Procédé de détermination d'un point de départ (M) entre des entités (E), dans lequel les entités (E) sont chacune destinées à déterminer leur lieu de séjour (A, A*) et pour communiquer par le biais d'une interface de communication, dans lequel
les lieux de séjour (A) des entités (E) sont déterminés dans du matériel cartographique (1), un cercle (2) entourant toutes les entités (E) est déterminé et une position optimale du point de départ (M) est établie de manière itérative, dans lequel le point de départ (M) coïncide initialement avec un centre de cercle (3) du cercle (2) entourant les entités (E), dans lequel, pour trouver une position optimale du point de départ (M), pour chaque entité (E), un itinéraire (R) entre le lieu de séjour (A) respectif et le point de départ (M) est déterminé, itinéraire qui se compose d'au moins deux points d'itinéraire reliés respectivement par une section d'itinéraire, et, pour déplacer la position du point de départ (M), une somme de toutes les distances temporelles ou spatiales des itinéraires (R) entre des entités (E) et un point de départ (M) est inférieure à une distance maximale fixée, et/ou une différence de distance temporelle ou spatiale entre un itinéraire (R) le plus court et un itinéraire le plus long est inférieure à une différence maximale fixée, dans lequel les entités (E) se rencontrent au point de départ (M) en partant de leurs lieux de séjour (A) respectifs, et dans lequel des vitesses de déplacement moyennes pour les entités (E) respectives sont supposées pour déterminer le point de départ (M),
**caractérisé en ce que**
les vitesses de déplacement moyennes supposées pour les entités (E) respectives sont apprises en fonction d'un moyen de transport qu'elles ont choisi.

2. Procédé selon la revendication 1,
**caractérisé en ce que**
les lieux de séjour (A) des entités (E) sont déterminés dans du matériel cartographique (1) mis à disposition par au moins deux fournisseurs de cartes, dans lequel les lieux de séjour (A) déterminés dans le matériel cartographique (1) différent d'une entité (E) respective sont comparés entre eux.

3. Procédé selon la revendication 1 ou 2,
**caractérisé en ce que**
des informations sur le trafic actuelles sont prises en compte lors du calcul de l'itinéraire (R) entre les lieux de séjour (A) et le point de départ (M).

4. Procédé selon l'une des revendications 1 à 3,
**caractérisé en ce que**
au moins une entité (E) se déplace le long de son itinéraire (R) avec l'un des moyens de transport suivants :
- à pied ;
- sur un vélo ;
- avec un scooter électrique ;
- par le biais d'un moyen de transport public, en particulier par bus et/ou train ;
- avec une voiture, en particulier une voiture de tourisme, un camion et/ou une camionnette ; ou
- avec un véhicule à commande autonome, en particulier un drone, de préférence un drone volant.

5. Procédé selon l'une des revendications 1 à 4,
**caractérisé en ce que**
un algorithme (9) pour déterminer la position du point de départ (M) exécute au moins les étapes suivantes :
- détermination d'une position appropriée d'un centre de cercle (3) d'un cercle (2) et d'un diamètre de cercle minimal, de sorte que toutes les entités (E) se trouvent à l'intérieur et/ou sur une circonférence (U) du cercle (2) ;
- placement de la position du point de départ (M) à la position du centre de cercle (3) ;
- pour chaque entité (E) : détermination d'un itinéraire (R) s'étendant du lieu de séjour (A) au point de départ (M) ;
- déplacement de la position du point de départ (M) de sorte qu'une somme de toutes les distances temporelles ou spatiales des itinéraires (R) entre des entités (E) et un point de départ (M) soit inférieure à une distance maximale fixée, et/ou qu'une différence de distance temporelle ou spatiale entre un itinéraire le plus court et un itinéraire (R) le plus long soit inférieure à une différence maximale fixée.

6. Procédé selon l'une des revendications 1 à 5,
**caractérisé en ce que**
le point de départ (M) est recalculé en tenant compte d'un lieu de séjour (A*) actuel d'au moins une des entités (E).

7. Procédé selon l'une des revendications 1 à 6,
**caractérisé en ce que**
pour déterminer la position optimale du point de départ (M), au moins l'un des critères suivants est en outre pris en compte :
- une équité ;
- une quantité de polluants, en particulier une quantité de CO₂, générée par un déplacement d'au moins un moyen de transport le long d'un itinéraire (R) ;
- une quantité d'énergie requise par au moins un moyen de transport pour se déplacer le long d'un itinéraire (R) ; et/ou
- les frais encourus pour le déplacement d'au moins un moyen de transport le long d'un itinéraire (R).

8. Système pour établir un point de départ (M) entre des entités (E), comprenant au moins trois entités (E), dans lequel les entités (E) sont respectivement agencées pour déterminer leur lieu de séjour et le partager par l'intermédiaire d'une interface de communication,
**caractérisé en ce que**
au moins les trois entités (E) sont destinées à mettre en œuvre un procédé selon l'une des revendications 1 à 7.
